Europäisches Patentamt

European Patent Office    (11) Numéro de publication: **0 376 839**

Office européen des brevets    **A1**

(12)    # DEMANDE DE BREVET EUROPEEN

(21) Numéro de dépôt: **89403655.7**

(22) Date de dépôt: **27.12.89**

(51) Int. Cl.⁵: **F16L 51/02, G21C 13/02**

(30) Priorité: **29.12.88 FR 8817400**

(43) Date de publication de la demande:
**04.07.90 Bulletin 90/27**

(84) Etats contractants désignés:
**DE GB IT**

(71) Demandeur: **COMMISSARIAT A L'ENERGIE ATOMIQUE**
**31/33, rue de la Fédération**
**F-75015 Paris(FR)**

(72) Inventeur: **Cheron, Christian**
**1 Allée de la Prairie de Courcelles**
**F-91320 Gif Sur Yvette(FR)**
Inventeur: **Noudelmann, Michel**
**46 Boulevard Gambetta**
**F-94130 Nogent Sur Marne(FR)**
Inventeur: **Thomas, Pierre**
**16 rue Saint Senoch**
**F-75017 Paris(FR)**
Inventeur: **Vrillon, Bernard**
**15 rue des Ecoles**
**F-91320 Wissous(FR)**

(74) Mandataire: **Mongrédien, André et al**
**c/o BREVATOME 25, rue de Ponthieu**
**F-75008 Paris(FR)**

(54) **Compensateur de dilatation monté entre deux tuyauteries.**

(57) Compensateur de dilatation monté entre deux tuyauteries (1 et l') et formé d'un soufflet (2), de deux lames (3 et 3') de flexion ainsi que de manchons (10, 10') de répartition des contraintes permettant d'éviter les concentrations de contraintes sur les tuyauteries (1 et 1'). Une chambre étanche comprenant un soufflet externe (27) peut être prévue.

Application aux circuits véhiculant des fluides chauds.

FIG.1

## COMPENSATEUR DE DILATATION MONTE ENTRE DEUX TUYAUTERIES

L'invention a trait à un compensateur de dilatation monté entre deux tuyauteries.

Il est souvent nécessaire de prévoir des montages souples entre tuyauteries consécutives d'un même circuit hydraulique pour tenir compte des dilatations dues notamment à l'échauffement du fluide de ces tuyaux. Dans la conception décrite par le brevet français 2 538 156, les tuyauteries sont séparées par un jeu et leurs extrémités jointes par un soufflet pour maintenir l'étanchéité ; un tube externe entoure par ailleurs les tuyauteries et le soufflet et s'étend jusqu'aux réservoirs reliés par les deux tuyauteries. Le tube externe est soudé aux réservoirs et supporte donc les efforts mécaniques transmis entre les réservoirs, empêchant par sa rigidité des déplacements excessifs, alors que le soufflet ne subit que l'effort de pression du fluide qu'il véhicule.

Cette conception présente l'inconvénient d'utiliser un tube externe de grande longueur et n'est par ailleurs utilisable que pour des circuits hydrauliques ne comprenant que deux tuyauteries.

Le brevet européen 0 028 742 décrit une conception plus proche de l'invention où les tuyauteries sont réunies par une structure de liaison constituée en particulier de deux paires de leviers de part et d'autre des tuyauteries ; chaque paire de leviers est reliée par ses extrémités aux tuyauteries grâce à des appuis de réception qui sont constitués essentiellement par deux manchons à coupe en forme de Y. Plus exactement, les extrémités des paires de leviers sont soudées à des plaquettes elles-mêmes soudées à la branche verticale des Y, une des branches obliques des Y est soudée par son extrémité aux tuyauteries et l'autre branche oblique des Y est utilisée pour le soutien d'un soufflet externe de sécurité.

Les leviers de chaque paire sont réunis par une articulation, et les articulations des deux paires sont coaxiales, si bien que les dilatations sur la ligne de tuyauteries devraient se traduire par des mouvements angulaires des tuyauteries sans production de contraintes. Le résultat réel est cependant souvent le contraire de celui qui était espéré à cause de l'impossibilité de graisser correctement les articulations à température élevée ; et, par ailleurs, en raison des pressions de contact entre les axes et les chapes, qui atteignent des valeurs très élevées pour des tuyauteries de grand diamètre soumises à des pressions internes, des grippages des articulations sont inévitables. Dans ce cas, les contraintes transmises dans les leviers et les extrémités des tuyauteries peuvent être considérables.

L'invention a pour objet la suppression de ces contraintes excessives et a pour moyen principal le remplacement des paires de leviers articulés par des lames souples coplanaires. Ces lames fléchissent librement par suite des dilatations d'ensemble des tuyauteries et ne transmettent que des contraintes réduites. Des concentrations de contraintes sont cependant produites aux extrémités des lames, et c'est pourquoi les manchons présentent une longueur libre relativement importante entre les zones de liaison aux lames et les zones de raccordement aux tuyauteries afin d'obtenir des contraintes à peu près uniformes sur la circonférence des tuyauteries. L'accroissement de la longueur des lames qui en résulte se traduit également par une diminution des contraintes de flexion dans les lames elles-mêmes. Il n'est pas possible d'édicter des règles précises de dimensionnement, mais, dans la réalisation représentée, ces longueurs libres correspondent à peu près au tiers de la longueur des lames pour chacun des manchons ; on peut s'attendre à ce que le rapport puisse être nettement différent pour d'autres réalisations concrètes.

Les concentrations de contraintes peuvent être réduites si les appuis de réception sont annulaires, au nombre de deux et assujettis à un manchon respectif, une extrémité de chacune des lames étant assujettie à chaque appui de réception.

On va maintenant décrire l'invention plus en détail à l'aide des figures suivantes illustrant une réalisation préférée, annexées à titre illustratif et non limitatif :

- La figure 1 représente une vue générale de l'invention ; et

- Les figures 2 et 3 représentent deux agrandissements.

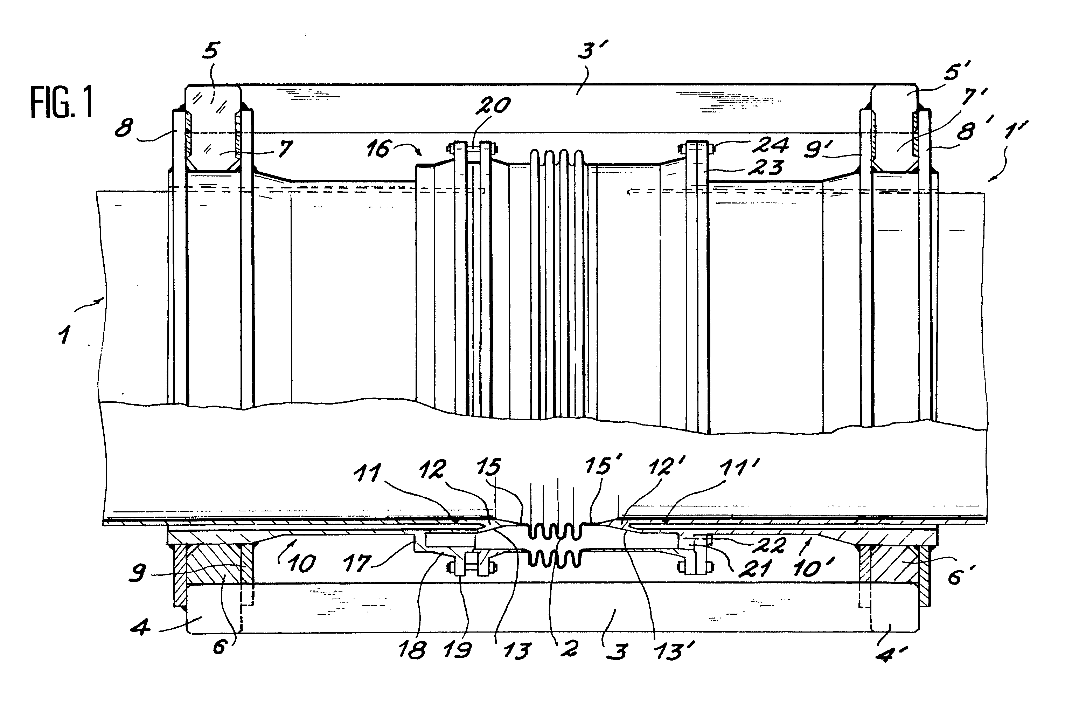

La figure 1 représente deux tuyauteries 1 et 1' en prolongement avec un espacement ; un soufflet interne 2 joint les deux tuyauteries 1 et 1' et délimite donc avec elles un volume étanche où le fluide peut circuler sans fuites. Les tuyauteries 1 et 1' sont également reliées par deux lames 3 et 3' identiques, souples, à section rectangulaire et coplanaires pour permettre des débattements angulaires des tuyauteries 1 et 1' suivant les déplacements perpendiculaires au plan de la figure 1 par flexion des lames 3 et 3'.

Chacune des lames 3 et 3' est reliée à chacune des tuyauteries 1 et 1'. Plus précisément, une extrémité 4 de la première lame 3 et une extrémité 5 de la seconde lame 3' sont soudées à un appui de réception respectif 6 et 7 constitué d'une plaque soudée par deux côtés opposés à deux anneaux parallèles 8 et 9 eux-mêmes soudés à une extrémité d'un manchon 10 qui entoure la première tuyauterie 1 près de son extrémité.

Le manchon 10 comprend à son extrémité opposée un rebord cylindrique intérieur 12 de diamètre légèrement inférieur à celui du manchon 10 proprement dit, et de périmètre semblable à celui de la tuyauterie 1, qui lui est relié par un raccordement conique 13 aboutissant au milieu environ de la paroi externe du rebord cylindrique 12. L'extrémité du rebord cylindrique 12 orientée en direction des anneaux 8 et 9 est soudée à l'extrémité 11 de la première tuyauterie 1, alors que son autre extrémité 15 est orientée vers l'autre tuyauterie 1' et, dans la réalisation représentée, un bord du soufflet interne 2 lui est soudé.

Une bride 16 a été prévue d'une pièce avec le manchon 10 et se situe entre les anneaux 8 et 9 d'une part, le rebord cylindrique 12 d'autre part ; la bride 16 est coudée et peut se décomposer sucessivement en une première partie radiale 17 s'étendant du manchon 10 vers l'extérieur, une partie axiale 18 s'étendant vers l'autre tuyauterie 1' et une seconde partie radiale 19 s'étendant de nouveau vers l'extérieur et comprenant des trous pour goujons 20.

Le compensateur de dilatation est pratiquement symétrique, et la description que l'on vient de lire peut s'appliquer pour l'essentiel aux composants situés du côté de l'autre canalisation 1' ; on trouve ainsi des composants 4' à 15' semblables par symétrie aux composants 4 à 15 respectivement. Le second manchon 10' porte également une bride située à peu près au même endroit que la première bride 16, mais cette seconde bride 21 est de constitution différente et comprend simplement une partie en saillie radiale munie de taraudages borgnes pour des vis 22.

Les vis 22 peuvent permettre d'assujettir à la seconde bride 21 une plaque annulaire 23 munie de trous pour des goujons 24 disposés suivant une circonférence extérieure à celle des vis 22.

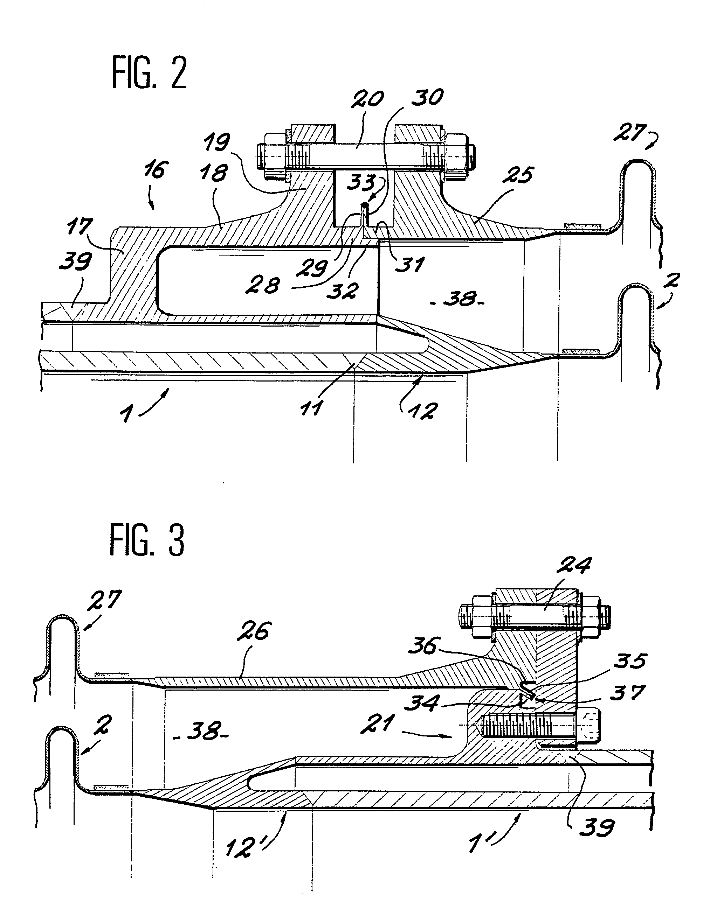

Les brides 16 et 21 servent à maintenir des couronnes respectives 25 et 26 (figures 2 et 3) à l'aide des goujons 20 et 24 ; un soufflet externe 27 est disposé entre les couronnes 25 et 26, autour du premier soufflet 2 quand les goujons 20 et 24 sont vissés ; il est utilisé à la fois pour protéger le soufflet interne 2 et pour créer une enceinte étanche de sécurité au cas où le soufflet 2 viendrait à crever. La partie axiale 18 de la première bride 16 comporte à cet effet une partie en prolongement axial 28 qui dépasse de la seconde partie radiale 19 en direction de l'autre tuyauterie 1', et qui est munie à son extrémité d'une nervure annulaire 29 faisant saillie radialement vers l'extérieur. De son côté, la première couronne 25 possède à l'extrémité d'une partie axiale 31 d'extrémité dirigée vers la première bride 16 une nervure de forme semblable 30, en saillie radiale. La première bride 16 et la première couronne 25 sont tout d'abord assemblées par une portée cylindrique de centrage 32 puis rapprochées par un mouvement axial jusqu'à mettre les deux nervures 29 et 30 en contact, après quoi une soudure d'étanchéité 33 est établie à l'extrémité commune de ces dernières. On élimine ainsi tout jeu de ce côté ; la soudure 33 n'est soumise à aucun effort.

Une disposition équivalente est retenue sur l'autre tuyauterie 1'; toutefois, les nervures 34 et 35 établies respectivement sur la seconde bride 21 et sur la seconde couronne 26 à l'intérieur d'un renfoncement annulaire 36 délimité par ces pièces sont dirigées vers la plaque 23 qui, au montage, vient se plaquer sur l'ouverture du renfoncement annulaire 36.

Les nervures 34 et 35 sont coniques afin de faciliter la réalisation de la soudure d'étanchéité 37 et font saillie radialement vers l'intérieur ; elles sont unies à leur contour commun par une soudure 37 qui joue le même rôle que la précédente. L'espace 38 compris entre les soufflets 2 et 27, les couronnes 25 et 26, les brides 16 et 21 et les manchons 10 et 10' est donc étanche ; il peut être rempli de gaz neutre. Comme les soufflets 2 et 27 sont facilement accessibles et assez minces, il est facilement possible de vérifier leur état et le contenu de l'espace étanche 38 (par exemple par radiographie et bougies de détection) pour savoir si une fuite a lieu ou non.

Pour démonter l'ensemble formé par les couronnes et le soufflet externe, il suffit de meuler les soudures 33 et 37 et de dévisser les goujons 20 et 24. La largeur des nervures est suffisante pour permettre de souder de nouveau.

Les concentrations de contraintes produites par la déformation des lames 3 et 3' au voisinage de leurs extrémités 4, 4', 5 et 5' s'égalisent progressivement sur le pourtour des manchons 10 et 10' vers les rebords cylindriques 12 et 12', si bien que les contraintes supportées par les tuyauteries 1 et 1' sont à peu près uniformes, ce qui est un grand avantage.

L'invention peut être envisagée pour de nombreuses applications, mais la réalisation représentée a été conçue d'abord pour les circuits de centrales nucléaires à neutrons rapides véhiculant du sodium fondu sous pression. Les tuyauteries 1 et 1' sont alors en acier inoxydable, de même que le soufflet interne 2 et les parties des manchons 10 et 10' en contact avec le sodium ou susceptibles de le devenir par suite d'un envahissement de l'espace 38. C'est pourquoi les manchons 10 et 10' sont faits de deux pièces assemblées par soudage suivant des cordons circulaires 39 et 39' établis à proximité de la bride respective 16 ou 21 du côté opposé aux soufflets 2 et 27. Les parties des manchons 10 et 10' comprenant les brides 16 et 21 sont donc également en acier inoxydable, alors que les parties du côté des anneaux 8 et 9 ainsi que les lames 3 et 3′ sont en acier ordinaire. Les lames 3 et 3′ sont généralement constituées d'une seule plaque mais peuvent être constituées d'un empilement de plusieurs plaques de plus faible épaisseur.

**Revendications**

1. Compensateur de dilatation monté entre deux tuyauteries (1, 1′) et comprenant une enveloppe flexible interne (2) entre les deux tuyauteries qui délimite avec elles un conduit de fluide étanche, ainsi qu'une structure de liaison entre les deux tuyauteries constituée de deux éléments de flexion de part et d'autre des tuyauteries, de deux manchons entourant une tuyauterie respective à laquelle ils sont assujettis par une extrémité (12, 12′) et d'appuis de réception (6, 7, 8, 9, 6′, 7′, 8′, 9′) reliant rigidement les éléments de flexion aux manchons, caractérisé en ce que les éléments de flexion sont des lames souples coplanaires et en ce que les manchons présentent une longueur relativement importante entre leur extrémité assujettie à la tuyauterie et les appuis de réception.

2. Compensateur de dilatation selon la revendication 1, caractérisé en ce que les appuis de réception sont annulaires, au nombre de deux et assujettis à un manchon respectif, une extrémité de chacune des lames étant assujettie à chaque appui de réception.

3. Compensateur de dilatation selon l'une quelconque des revendications 1 ou 2, caractérisé en ce que les manchons sont soudés à l'extrémité (11, 11′) de la tuyauterie (1, 1′) à laquelle ils sont assujettis.

4. Compensateur de dilatation selon la revendication 3, caractérisé en ce que les manchons sont conformés avec une extrémité en rebord (12, 12′) sensiblement cylindrique, de périmètre semblable à celui de la tuyauterie à laquelle ils sont soudés, une extrémité du rebord étant soudée à ladite tuyauterie, un bord de l'enveloppe flexible interne étant assujetti à l'autre extrémité (15, 15′) du rebord.

5. Compensateur de dilatation selon l'une quelconque des revendications 1 à 4, caractérisé en ce qu'il comprend deux brides (16, 21) assujetties chacune à un manchon respectif (10, 10′), une enveloppe flexible externe (27) entourant l'enveloppe flexible interne (2), deux couronnes (25, 26) assujetties à deux bords opposés de l'enveloppe flexible externe, chaque couronne étant vissée à une bride associée.

6. Compensateur de dilatation selon la revendication 5, caractérisé en ce que chaque couronne et chaque bride est munie d'une nervure (29, 30, 34, 35), les nervures de chaque couronne et de la bride associée venant se superposer avec un contour d'extrémité commun au vissage de la couronne et de la bride, les nervures s'étendant vers l'extérieur (29, 30) pour une des couronnes et la bride associée, vers l'intérieur (34, 35) pour l'autre couronne et sa bride associée.

FIG. 1

EP 0 376 839 A1

FIG. 2

FIG. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 419 455  (INTERATOM)<br>* Fig. *<br>--- | 1 | F 16 L  51/02<br>G 21 C  13/02 |
| A | EP-A-0 132 619  (MARTI)<br>* Fig. 7 *<br>--- | 1 | |
| A,D | EP-A-0 028 742  (JAN SING)<br>* Fig. *<br>----- | 1 | |

### DOMAINES TECHNIQUES RECHERCHES (Int. Cl.5)

F 16 L
G 21 C
F 17 D

Le présent rapport a été établi pour toutes les revendications

| Lieu de la recherche | Date d'achèvement de la recherche | Examinateur |
|---|---|---|
| LA HAYE | 29-03-1990 | HUBEAU M.G. |

EPO FORM 1503 03.82 (P0402)